# FASCICULE DE BREVET EUROPEEN

(11) **EP 1 604 583 B1**
(45) Date de publication et mention de la délivrance du brevet: **07.07.2010**
(21) Numéro de dépôt: 05290504.9
(22) Date de dépôt: 04.03.2005
(51) Int. Cl.: A45C 13/18, B29C 51/14

(54) **Enveloppe de securite et son procede de fabrication**
Sicherheitsschale und Verfahren zur Herstellung
A security shell and its manufactering process

(30) Priorité: 11.03.2004 FR 0402661; 20.12.2004 FR 0413688
(43) Date de publication de la demande: 14.12.2005
(73) Titulaire: Roctool, 73370 Le Bourget du Lac (FR)
(72) Inventeur: Guichard, Alex, 73370 La Chapelle du Mont du Chat (FR); Bonnevie, Bruno, 73160 Cognin (FR)
(74) Mandataire: Gasquet, Denis

(56) Documents cités:
- WO-A-01/30193
- GB-A- 1 138 104
- GB-A- 2 399 671
- PATENT ABSTRACTS OF JAPAN vol. 2000, no. 01, 31 janvier 2000 (2000-01-31) & JP 11 295967 A (BRIDGESTONE CORP), 29 octobre 1999 (1999-10-29)

## Description

La présente invention concerne une enveloppe, telle qu'un container, sécurisée constituée d'une coque constituant une mallette, une valise, un container de transport de fonds, de valeurs ou d'objets de valeurs. Mais l'invention peut concerner aussi des containers de marchandise quelconque, des boîtiers de protection, des tiroirs caisse de magasins, des distributeurs de billets, voir des locaux et des panneaux et capotages utilisés à des fins de sécurité et/ou de commande.

L'invention concerne plus particulièrement une enveloppe sécurisée dont la coque est réalisée en matériaux composites stratifiés ayant des caractéristiques électriques variables en fonction des sollicitations qui leurs sont appliquées.

On connaît déjà des valises comprenant des systèmes de protection, mais les systèmes actuels présentent des faiblesses qui permettent aux gens indélicats de neutraliser la sécurité.

On connaît déjà des containers sécurisés par une action manuelle volontaire sur un actionnement, des containers sécurisés par un changement d'état d'un élément spécifique dudit container (serrures, charnières, capteur local, etc...), des containers métalliques, généralement aluminium pour réduire le poids.

On connaît aussi des containers en composite Epoxyde comprenant un maillage électronique ou un grillage métallique, des containers en polyester (réalisé en projection) avec circuit imprimé collé sur les faces intérieures. Mais les systèmes à maillages électroniques (circuits imprimés collés sur une face) ne permettent pas de réaliser des objets de formes quelconques (limités à des plaques rectangulaires plates).

Un dispositif ayant les caractéristiques du préambule de la revendication 1 est connu par le document GB-A-1138104.

Tous les dispositifs connus sont déjà un progrès pour la sécurité, mais ne sont pas totalement fiables, et l'invention se propose de remédier aux inconvénients des systèmes traditionnels.

La présente invention se veut de résoudre les inconvénients des dispositifs actuels en proposant une enveloppe ou autre telle qu'un tiroir ou distributeur de billets, destiné à protéger ou détruire toutes valeurs convoitées par des infracteurs, container particulièrement fiable et destiné à être produit selon un procédé industriel.

L'enveloppe de l'invention peut bien entendu être un simple carrossage, ou capotage de sécurité entrant dans la réalisation d'un ensemble technique complet.

La solution selon l'invention concerne une enveloppe sécurisée constituée d'une coque formée par une paroi comprenant au moins trois couches, à savoir deux couches conductrices constituées par un matériau électriquement conducteur prenant en sandwich une couche intermédiaire isolante constituée d'un matériau électriquement isolant, la paroi étant constituée par un matériau composite stratifié, qui est **caractérisée en ce que** les couches conductrices sont constituées par des couches de nature organique électriquement conducteur, et en ce que lesdites couches conductrices sont constituées d'une résine comprenant une charge ou un agent conducteur, tandis que les deux couches conductrices de la paroi comprennent un ensemble de connexions électriques dont une borne de connexion d'alimentation électrique et une borne de connexion de mesures électriques à chacune desdites couches conductrices, tandis que ladite enveloppe comprend une carte ou circuit électronique et une alimentation électrique, afin de détecter une variation de résistivité et/ou de capacité et de l'exploiter pour générer une information.

Selon une caractéristique complémentaire, les résines sont des résines thermodurcissables ou des résines du type polyester, ou des époxydes, voire des résines thermoplastiques.

Selon une autre caractéristique complémentaire, la charge en agent conducteur est du graphite, du carbone, des poudres métalliques ou de nanotubes de carbone, tandis que chacune des couches conductrices comprend deux connexions, à savoir une connexion d'alimentation électrique et une connexion de mesures électriques, afin que sous une alimentation électrique de chaque couche conductrice, la paroi avec son isolant intermédiaire se comporte comme un condensateur sensible à toute modification physique de sa structure.

L'invention concerne aussi le procédé de réalisation de l'enveloppe sécurisée, ledit procédé comportant les étapes suivantes :
- L'étape qui consiste à formuler au moins un matériau composite de nature organique électriquement conducteur,
- L'étape qui consiste à réaliser un matériau composite stratifié multicouche, ledit matériau composite comportant au moins deux couches électriquement conductrices dudit matériau de nature organique et au moins une couche intermédiaire d'un matériau électriquement isolant.
- L'étape qui consiste à réaliser des coques par thermoformage dudit matériau composite stratifié multicouche,
- L'étape qui consiste à réaliser une enveloppe formant un container avec deux coques fermées l'une sur l'autre,
- L'étape qui consiste à relier une borne de connexion d'alimentation électrique à chacune desdites couches desdits matériaux de nature organique électriquement conducteurs,
- L'étape qui consiste à relier une borne de connexion de mesures électriques à chacune desdites couches desdits matériaux de nature organique électriquement conducteurs,
- L'étape qui consiste à alimenter lesdites couches conductrices dudit matériau organique électriquement conducteur par un courant électrique d'intensité appropriée et sous une tension appropriée.
tandis qu'il consiste, grâce à un circuit électronique, dans la réalisation des étapes suivantes :
à mesurer des valeurs résistives et/ou capacitives de son matériau composite stratifié multicouche.
et à générer des informations électriques fonction des valeurs résistives et/ou capacitives du matériau composite stratifié multicouche

D'autres caractéristiques et avantages de l'invention se dégageront de la description qui va suivre en regard des dessins annexés qui ne sont donnés qu'à titre d'exemples non limitatifs.
La figure 1 est une vue en coupe du matériau constituant la paroi d'un container selon l'invention ;
La figure 2 est une vue en perspective illustrant l'étape du procédé qui consiste à générer des coques par thermoformage du matériau constituant la paroi du container ;
La figure 3 est une vue en coupe illustrant l'étape qui consiste à alimenter lesdites couches conductrices dudit matériau organique électriquement conducteur par un courant électrique.
La figure 4 représente schématiquement, un objet réalisé, selon l'invention, dans une coupe transversale.
La figure 5 est une vue en perspective d'un container.

Le container réalisé selon le procédé de l'invention est constitué d'une coque (1) formée par une paroi (2) constituée par un matériau composite stratifié comprenant au moins trois couches (3, 4, 5), à savoir deux couches conductrices (3, 5) constituées par un matériau électriquement conducteur prenant en sandwich une couche intermédiaire isolante (4) constituée d'un matériau électriquement isolant.

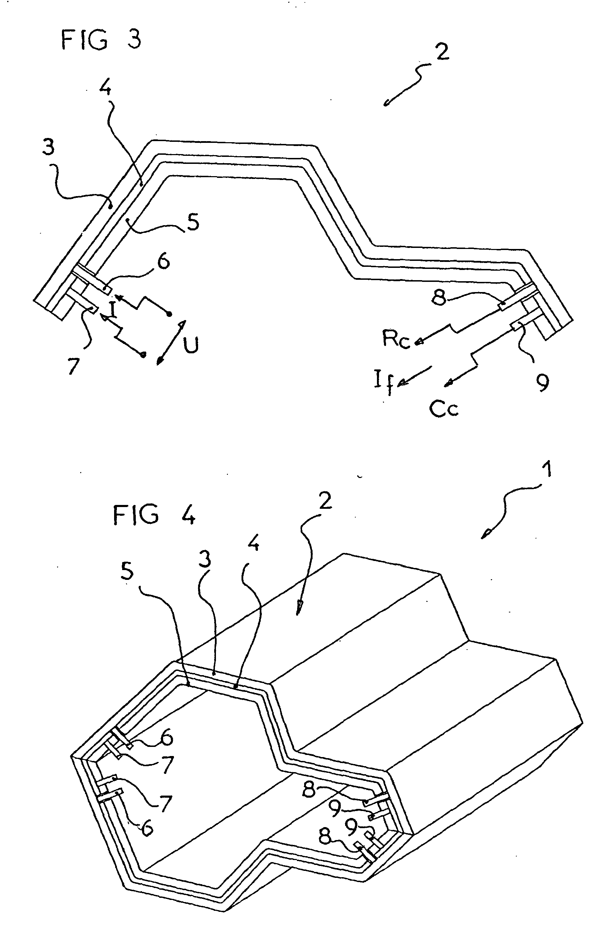

Selon l'invention les deux couches conductrices (3, 5) de la paroi (2) formant la coque (1) comprenant un ensemble de connexions électriques (6, 7, 8, 9), tel qu'illustré à la figure 3.

Ainsi chacune des couches conductrices (3, 5) comprend deux connexions, à savoir une connexion d'alimentation électrique (6, 7) et une connexion de mesures électriques (8, 9).

Sous une alimentation électrique de chaque couche conductrice (3, 5), la paroi (2) avec son isolant intermédiaire se comporte comme un condensateur sensible à toute modification physique de sa structure. Le rapprochement des couches conductrices (3, 5) ou alors l'établissement d'un pont électrique entre ces couches modifient les valeurs résistives capacitives de la paroi (2).

La détection d'une variation de ces valeurs est alors exploitée pour générer une information.

Ainsi lors d'une tentative d'effraction la variation de la résistivité de la paroi du container, génère une information électrique à une unité de commande qui actionne le système de sécurité. Ledit système étant par exemple un dispositif de détérioration des valeurs contenue dans le container comme par exemple un encrage des billets de banque, une détérioration de l'ensemble du container ou la transmission à une centrale de surveillance, que le container est entre des mains non autorisées.

Grâce au container de l'invention 100 % de la surface de l'objet est opérationnelle.

Par ailleurs l'invention permet :
- d'utiliser des matériaux composites stratifiés permettant de réaliser des objets de formes quelconques, dans des conditions industrielles à moindre coût.
- d'être utilisée dans un contexte industriel (Mise en forme de composites) donc destiné à des applications de majeures et grosses quantités à des coûts optimisés.
- une fiabilité et sensibilité du mode de détection de variation de valeurs électriques évoluant avec toute modification physique de la structure de l'objet (par exemple : température, cassure, perçage, pressage, etc...) sur 100 % de la surface de l'objet.

L'invention permet par ailleurs la réalisation d'objets de formes quelconques destinés aux domaines techniques.

Les couches conductrices (3, 5) en matériau conducteur peuvent être réalisées en une résine plastique comprenant une charge ou un agent conducteur.

Les résines utilisables peuvent être, toutes résines thermodurcissables comme par exemple du polyester, des époxydes, ou toutes résines thermoplastiques, comme par exemple du polyéthylène du polypropylène, du polyamide, ou du PET.

La charge en agent conducteur peut être du graphite, du carbone, des poudres métalliques ou de nanotubes de carbone.

Ajoutons que la couche intermédiaire (4) isolante est un isolant électrique polarisable, c'est-à-dire comportant des propriétés diélectriques.

L'invention concerne aussi le procédé de réalisation du container.

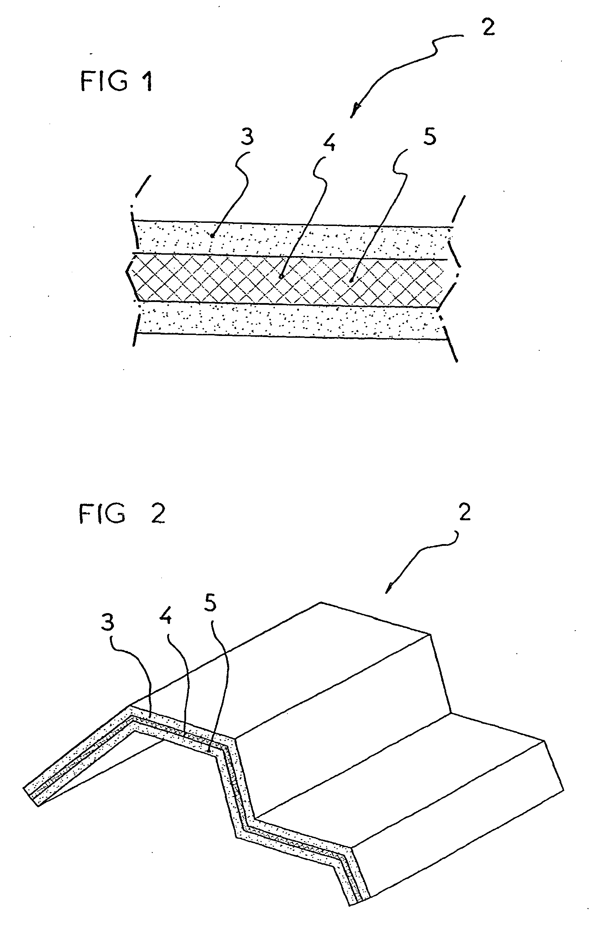

Le procédé de l'invention permettant la réalisation de containers constitués de coques de formes quelconques en matériaux composites stratifiés pouvant générer une information électrique en vue d'actionner une commande ou un système de sécurité, ledit procédé comporte les étapes suivantes :
- L'étape qui consiste à formuler au moins un matériau composite de nature organique électriquement conducteur (3, 5),
- L'étape qui consiste à réaliser un matériau composite stratifié multicouche (2), ledit matériau composite (2) comportant au moins deux couches électriquement conductrices dudit matériau de nature organique (3, 5) et au moins une couche intermédiaire d'un matériau électriquement isolant (4), tel qu'illustré à la figure 1.
- L'étape qui consiste à réaliser des coques (1) par thermoformage dudit matériau composite stratifié multicouche (2),
- L'étape qui consiste à réaliser un container avec au moins une desdites coques (1), tel qu'illustré à la figure 4.
- L'étape qui consiste à relier une borne de connexion d'alimentation électrique (6) et (7) à chacune desdites couches desdits matériaux de nature organique électriquement conducteurs (1),
- L'étape qui consiste à relier une borne de connexion de mesures électriques (8) et (9) à chacune desdites couches desdits matériaux de nature organique électriquement conducteur (1),
- L'étape qui consiste à alimenter lesdites couches conductrices dudit matériau organique électriquement conducteur (1) par un courant électrique d'intensité (I) approprié et sous une tension (U) appropriée.

L'étape de réalisation des coques peut bien entendu être réalisée par thermo-compression ou tout autre procédé d'injection.

Le fonctionnement en sécurité du container consiste grâce à un circuit électronique dans la réalisation des étapes suivantes :
- mesure des valeurs résistives (Rc) et/ ou capacitives (Cc) de son matériau composite stratifié multicouche (2).
- génération d'informations électriques (If) fonction des valeurs résistives et/ou capacitives matériau composite stratifié multicouche (2).

On ajoutera que la couche externe conductrice (3) de la paroi (2) constitue par exemple le pôle négatif, tandis que la couche interne conductrice (5) constitue le pôle positif.

Bien entendu, dans le cadre de l'invention, les couches conductrices peuvent très bien être alimentées par un courant alternatif.

Notons aussi que l'on pourrait revêtir la couche externe (3) d'un revêtement de protection, destiné à protéger le container des chocs, et des vibrations. Cette couche pourrait être par exemple un moussage en polyuréthane.

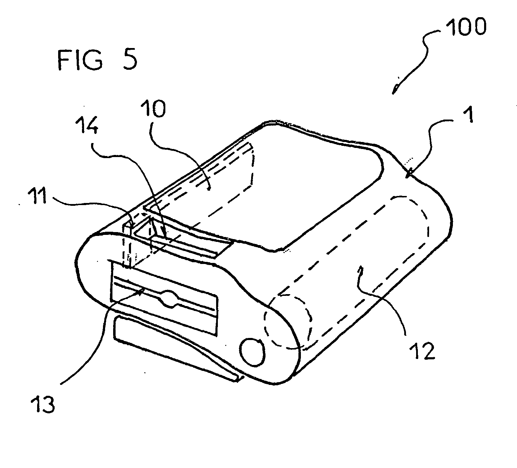

La figure 5 représente un exemple de réalisation d'un container, qui comprend une carte électronique (10) une batterie d'alimentation électrique (11), et un module d'encrage (12). Le container sert par exemple à la sécurisation de billets de banque qui sont introduit par la fente d'introduction frontale (13), tandis que le partie supérieure comprend un compteur de billet totalisateur (14). Comme on l'a vu précédemment l'infraction par détérioration de la coque, provoque une variation de résistivité, et cette information est transmise à un déclencheur qui provoque l'encrage des billets pour les rendre inutilisables.

## Revendications

1. Enveloppe sécurisée formant un container, constituée d'une coque (1) formée par une paroi (2) comprenant au moins trois couches (3, 4, 5), à savoir deux couches conductrices (3, 5) constituées par un matériau électriquement conducteur prenant en sandwich une couche intermédiaire isolante (4) constituée d'un matériau électriquement isolant, la paroi (2) étant constituée par un matériau composite stratifié, **caractérisé en ce que** les couches conductrices (3, 5) sont constituées par des couches de nature organique électriquement conducteur, et **en ce que** lesdites couches conductrices (3, 5) sont constituées d'une résine comprenant une charge ou un agent conducteur, tandis que les deux couches conductrices (3, 5) de la paroi (2) comprennent un ensemble de connexions électriques (6, 7, 8, 9) dont une borne de connexion d'alimentation électrique (6) et (7) et une borne de connexion de mesures électriques (8) et (9) à chacune desdites couches conductrices (3,5), tandis que ladite enveloppe comprend une carte ou circuit électronique (10) et une alimentation électrique (11), afin de détecter une variation de résistivité et/ou de capacité et de l'exploiter pour générer une information.

2. Enveloppe (1) selon la revendication précédente, **caractérisée en ce que** les résines sont des résines thermodurcissables.

3. Enveloppe sécurisée (1) selon la revendication 2, **caractérisée en ce que** les résines sont des résines du type polyester, ou des époxydes.

4. Enveloppe (1) selon la revendications 1, **caractérisée en ce que** les résines sont des résines thermoplastiques.

5. Enveloppe (1) selon la revendication précédente, **caractérisée en ce que** la résine est du type polyéthylène, polypropylène, polyamide, ou du PET.

6. Enveloppe (1) selon l'une quelconque des revendications 1 à 5, **caractérisée en ce que** la charge en agent conducteur est du graphite, du carbone, des poudres métalliques ou de nanotubes de carbone.

7. Enveloppe selon la revendication 6, **caractérisée en ce que** chacune des couches conductrices (3, 5) comprend deux connexions, à savoir une connexion d'alimentation électrique (6, 7) et une connexion de mesures électriques (8, 9), afin que sous une alimentation électrique de chaque couche conductrice (3, 5), la paroi (2) avec son isolant intermédiaire se comporte comme un condensateur sensible à toute modification physique de sa structure.

8. Procédé de réalisation de l'enveloppe selon l'une quelconque des revendications 1 à 7, **caractérisé en ce qu'**il comporte les étapes suivantes :
- L'étape qui consiste à formuler au moins un matériau composite de nature organique électriquement conducteur (3, 5),
- L'étape qui consiste à réaliser un matériau composite stratifié multicouche (2), ledit matériau composite (2) comportant au moins deux couches électriquement conductrices dudit matériau de nature organique (3, 5) et au moins une couche intermédiaire d'un matériau électriquement isolant (4),
- L'étape qui consiste à réaliser des coques (1) par thermoformage dudit matériau composite stratifié multicouche (2),
- L'étape qui consiste à réaliser une enveloppe formant un container avec deux coques (1) fermées l'une sur l'autre,
- L'étape qui consiste à relier une borne de connexion d'alimentation électrique (6) et (7) à chacune desdites couches desdits matériaux de nature organique électriquement conducteurs (1),
- L'étape qui consiste à relier une borne de connexion de mesures électriques (8) et (9) à chacune desdites couches desdits matériaux de nature organique électriquement conducteurs (1),
- L'étape qui consiste à alimenter lesdites couches conductrices dudit matériau organique électriquement conducteur (1) par un courant électrique d'intensité (I) approprié et sous une tension (U) appropriée,
tandis qu'il consiste, grâce à un circuit électronique, dans la réalisation des étapes suivantes :
à mesurer des valeurs résistives (Rc) et/ou capacitives (Cc) de son matériau composite stratifié multicouche (2),
et à générer des informations électriques (If) fonction des valeurs résistives et/ou capacitives du matériau composite stratifié multicouche (2).

## Claims

1. Secured casing forming a container, consisting of a shell (1) formed by a wall (2) comprising at least three layers (3, 4, 5), i.e. two conducting layers (3, 5) consisting of an electrically conducting material sandwiching a intermediate insulating layer (4) consisting of an electrically insulating material, the wall (2) consisting of a stratified composite material, **characterized in that** the conducting layers (3, 5) consist of electrically conducting layers of organic type, and **in that** said conducting layers (3, 5) consist of a resin including a conducting charge or agent, whereas the two conducting layers (3, 5) of the wall (2) include a set of electrical connections (6, 7, 8, 9), including one terminal for connecting an electrical power supply (6) and (7) and one terminal for connecting electrical measurements (8) and (9) to each of said conducting layers (3, 5), whereas said casing includes an electronic card or circuit (10) and an electrical power supply (11), for detecting a variation of resistivity and/or of capacitance, and exploiting it to generate information.

2. Casing (1) according to the preceding claim, **characterized in that** the resins are thermosetting resins.

3. Secured casing (1) according to Claim 2, **characterized in that** the resins are resins of polyester type or epoxides.

4. Casing (1) according to Claim 1, **characterized in that** the resins are thermoplastic resins.

5. Casing (1) according to the preceding claim, **characterized in that** the resin is of polyethylene, polypropylene, polyamide or PET type.

6. Casing (1) according to any one of Claims 1 to 5, **characterized in that** the charge of conducting agent is of graphite, carbon, metallic powders or nanotubes of carbon.

7. Casing (1) according to Claim 6, **characterized in that** each of the conducting layers (3, 5) includes two connections, i.e. an electrical power supply connection (6, 7) and an electrical measurement connection (8, 9), so that when electrical power is supplied to each conducting layer (3, 5), the wall (2) with its intermediate insulant behaves like a capacitor which is sensitive to any physical modification of its structure.

8. Method of implementing the casing according to any one of Claims 1 to 7, **characterized in that** it includes the following stages:
- the stage which consists of formulating at least one electrically conducting composite material of organic type (3, 5),
- the stage which consists of implementing a multi-layer stratified composite material (2), said composite material (2) including at least two electrically conducting layers of said material of organic type (3, 5) and at least one intermediate layer of an electrically insulating material (4),
- the stage which consists of implementing shells (1) by thermoforming said multi-layer stratified composite material (2),
- the stage which consists of implementing a casing forming a container, with two shells (1) closed on each other,
- the stage which consists of connecting a terminal for connecting an electrical power supply (6) and (7) to each of said layers of said electrically conducting materials of organic type (1),
- the stage which consists of connecting a terminal for connecting electrical measurements (8) and (9) to each of said layers of said electrically conducting materials of organic type (1),
- the stage which consists of supplying an electric current of appropriate amperage (I) and appropriate voltage (U) to said conducting layers of said electrically conducting organic material (1),
whereas it consists, thanks to an electronic circuit, of implementing the following stages:
- measuring the values of the resistance (Rc) and/or capacitance (Cc) of its multi-layer stratified composite material (2),
- generating electrical information (If) as a function of the values of the resistance and/or capacitance of the multi-layer stratified composite material (2).

## Patentansprüche

1. Sicherheitsschale, die einen Behälter bildet und aus einer Schale (1) gebildet ist, die aus einer Wand (2) gebildet ist, die mindestens drei Schichten (3, 4, 5) umfasst, und zwar zwei leitende Schichten (3, 5), die aus einem elektrisch leitenden Material gebildet sind und dazwischen eine isolierende Zwischenschicht (4) aufweisen, die aus einem elektrisch isolierenden Material gebildet ist, wobei die Wand (2) aus einem Schichtverbundmaterial gebildet ist, **dadurch gekennzeichnet, dass** die leitenden Schichten (3, 5) aus elektrisch leitenden organischen Schichten gebildet sind und dass die leitenden Schichten (3, 5) aus einem Harz gebildet sind, das eine leitende Füllung oder ein leitendes Mittel umfasst, während die beiden leitenden Schichten (3, 5) der Wand (2) eine Gruppe von elektrischen Anschlüssen (6, 7, 8, 9) umfassen, wovon einer eine Stromanschlussklemme (6) und (7) und einer eine Anschlussklemme für elektrische Messungen (8) und (9) an jeder der leitenden Schichten (3, 5) ist, während die Schale eine Karte oder elektronische Schaltung (10) und eine Stromversorgung (11) umfasst, um eine Veränderung des spezifischen Widerstands und/oder der Kapazität zu erfassen und sie zum Erzeugen einer Information zu nutzen.

2. Schale (1) nach dem vorhergehenden Anspruch, **dadurch gekennzeichnet, dass** die Harze warmhärtende Harze sind.

3. Sicherheitsschale (1) nach Anspruch 2, **dadurch gekennzeichnet, dass** die Harze Polyester- oder Epoxidharze sind.

4. Schale (1) nach Anspruch 1, **dadurch gekennzeichnet, dass** die Harzethermoplastische Harze sind.

5. Schale (1) nach dem vorhergehenden Anspruch, **dadurch gekennzeichnet, dass** das Harz ein Polyethylen-, Polypropylen-, Polyamid- oder PET-Harz ist.

6. Schale (1) nach einem der Ansprüche 1 bis 5, **dadurch gekennzeichnet, dass** die Füllung aus einem leitenden Mittel Graphit, Kohlenstoff, Metallpulver oder Kohlenstoffnanoröhren ist bzw. sind.

7. Schale nach Anspruch 6, **dadurch gekennzeichnet, dass** jede der leitenden Schichten (3, 5) zwei Anschlüsse umfasst, und zwar einen Stromanschluss (6, 7) und einen Anschluss für elektrische Messungen (8, 9), damit sich die Wand (2) mit ihrem isolierenden Zwischenteil, wenn jede leitende Schicht (3, 5) mit Strom versorgt wird, wie ein Kondensator verhält, der leicht auf jede physikalische Veränderung seiner Struktur reagiert.

8. Verfahren zur Herstellung der Schale nach einem der Ansprüche 1 bis 7, **dadurch gekennzeichnet, dass** es die folgenden Schritte aufweist:
- den Schritt, der darin besteht, mindestens ein organisches, elektrisch leitendes Verbundmaterial (3, 5) herzustellen,
- den Schritt, der darin besteht, ein mehrschichtiges Schichtverbundmaterial (2) herzustellen, wobei das Verbundmaterial (2) mindestens zwei elektrisch leitende Schichten aus dem organischen Material (3, 5) und mindestens eine Zwischenschicht aus einem elektrisch isolierenden Material (4) aufweist,
- den Schritt, der darin besteht, durch Warmformen des mehrschichtigen Schichtverbundmaterials (2) Schalen (1) herzustellen,
- den Schritt, der darin besteht, eine Schale herzustellen, die einen Behälter mit zwei aufeinander schließenden Schalen (1) bildet,
- den Schritt, der darin besteht, eine Stromanschlussklemme (6) und (7) an jeder der Schichten des organischen, elektrisch leitenden Materials (1) zu befestigen,
- den Schritt, der darin besteht, eine Anschlussklemme für elektrische Messungen (8) und (9) an jeder der Schichten des organischen, elektrisch leitenden Materials (1) zu befestigen,
- den Schritt, der darin besteht, die leitenden Schichten des organischen, elektrisch leitenden Materials (1) mit elektrischem Strom mit einer geeigneten Stärke (I) und mit einer geeigneten Spannung (U) zu versorgen,
während es aufgrund einer elektronischen Schaltung in der Durchführung der folgenden Schritte besteht:
die Widerstandswerte (Rc) und/oder Kapazitätswerte (Cc) des mehrschichtigen Schichtverbundmaterials (2) zu messen
und in Abhängigkeit von den Widerstandswerten und/oder Kapazitätswerten des mehrschichtigen Schichtverbundmaterials (2) elektrische Informationen (If) zu erzeugen.
